# EUROPÄISCHE PATENTSCHRIFT

(11) **EP 3 023 750 B1**
(45) Veröffentlichungstag und Bekanntmachung des Hinweises auf die Patenterteilung: **10.10.2018**
(21) Anmeldenummer: 14003889.4
(22) Anmeldetag: 19.11.2014
(51) Int. Cl.: G01D 11/24, G01D 11/30

(54) **Fernsteuerbares Arbeitsgerät mit geschützter Signalempfangseinrichtung**
Remote-controlled equipment with a protected signal receiver
Appareil de travail télécommandable équipé d'un dispositif de réception de signal protégé

(43) Veröffentlichungstag der Anmeldung: 25.05.2016
(73) Patentinhaber: Wacker Neuson Produktion GmbH & Co. KG, 80809 München (DE)
(72) Erfinder: Lechner, Claus, 85457 Wörth (DE); Bartl, Andreas, 85457 Wörth (DE)
(74) Vertreter: Müller Hoffmann & Partner

(56) Entgegenhaltungen:
- EP-A1- 0 747 869
- DE-A1- 19 903 062

## Beschreibung

Die Erfindung betrifft ein fernsteuerbares Arbeitsgerät mit einer Signalempfangseinrichtung gemäß Patentanspruch 1.

Es ist bekannt, Arbeitsgeräte mittels Funk-, Infrarot oder Kabelfernsteuerung durch einen sich im Abstand zu dem Arbeitsgerät befindlichen Bediener fernzusteuern. Dieses Prinzip hat sich insbesondere bei Baumaschinen wie Walzen und Vibrationsplatten zur Bodenverdichtung bewährt, da derartige Geräte neben Lärm auch aufgabenbedingt starke Vibrationen erzeugen, die für den Menschen auf Dauer gesundheitsschädlich sein können. Befindet sich der Bediener jedoch in einer gewissen Entfernung zu dem Gerät, wird er vor derartigen Belastungen wirksam geschützt.

Aufgrund gesetzlicher Vorschriften und wegen ihrer besonderen Zuverlässigkeit haben sich in der Praxis vor allem Infrarot-Fernsteuerungen bewährt. Dabei trägt der Bediener einen Infrarotsender, mit dem er in bestimmter Weise kodierte Befehlssignale an das Arbeitsgerät übermittelt, das zum Empfang der Signale einen Infrarotsensor trägt. Um optimalen Empfang zu gewährleisten, befindet sich der auch als Infrarotauge bezeichnete Sensor an der Oberseite des Arbeitsgeräts und ragt oftmals über die Vorder- oder Oberkante des Gerätegehäuses hinaus. Diese Gestaltung gewährleistet zwar einen optimalen Empfang, birgt jedoch das Risiko, dass der Sensor durch Kranhaken, Verbaustreben o. ä. im harten Baustellenbetrieb beschädigt wird. Dieses Problem stellt sich umso mehr, als der Bediener sich im Abstand zu dem Arbeitsgerät befindet und dadurch oftmals Schwierigkeiten hat, die Höhe des Geräts beim Unterfahren von Stahlträgern korrekt einzuschätzen. Zur Lösung des Problems werden daher die Infrarotsensoren entweder in sehr massive und damit kostenintensive Gehäuse eingebaut oder in das Gerätegehäuse integriert, wodurch die optische Zugänglichkeit und damit die Empfangseigenschaften beeinträchtigt werden.

Aus der DE 199 03 062 A1 ist ein Arbeitsgerät mit einer Signalempfangseinrichtung bekannt, wobei die Signalempfangseinrichtung einen Infrarotsensor aufweist, der von einem Empfängergehäuse aufgenommen ist, das an dem Arbeitsgerät in mehrere Raumrichtungen elastisch beweglich befestigt ist.

In der EP 0 747 869 A1 wird eine Fernsteuerungsvorrichtung für eine Verbindung zwischen einem Magnetaufzeichnungs- und -wiedergabegerät einerseits sowie einem Tuner andererseits beschrieben. An dem Magnetaufzeichnungs- und -wiedergabegerät ist eine Infrarot-LED vorgesehen, die in dem Gerätegehäuse versenkbar ist. Durch Drücken eines die Infrarot-LED umgebenden Gehäuseteils kann die geschützte LED zwischen einer versenkten, im Gehäuse verborgenen Stellung und einer freistehenden Stellung bewegt werden.

Der Erfindung liegt die Aufgabe zugrunde, ein fernsteuerbares Arbeitsgerät anzugeben, bei dem eine Fernsteuersignal-Empfangseinrichtung vorgesehen ist, die nicht nur optimale Empfangseigenschaften bietet, sondern auch vor Beschädigung wirksam geschützt ist.

Die erfindungsgemäße Lösung der Aufgabe ist in Patentanspruch 1 angegeben. Vorteilhafte Ausgestaltungen sind den abhängigen Ansprüchen zu entnehmen.

Es wird ein fernsteuerbares Arbeitsgerät angegeben mit einer Signalempfangseinrichtung, die an dem Arbeitsgerät elastisch beweglich befestigt ist, wobei die Signalempfangseinrichtung von einem elastisch verformbaren Träger an einem Gehäuse des Arbeitsgeräts gehalten ist, und wobei der Träger an wenigstens einer Befestigungsstelle derart mit dem Gehäuse verbunden ist, dass bei Einwirken einer Kraft auf die Signalempfangseinrichtung die Verbindung zwischen dem Träger und dem Gehäuse an der Befestigungsstelle aufgrund einer elastischen Verformung des Trägers lösbar ist, so dass der Träger mit der Signalempfangseinrichtung in das Innere des Gehäuses bewegbar ist.

Der Träger ist somit in der Lage, die Bewegbarkeit der Signalempfangseinrichtung relativ zu dem restlichen Arbeitsgerät, insbesondere zu dessen Gehäuse zu ermöglichen. Somit kann die Signalempfangseinrichtung ihrerseits in einem starren Empfängergehäuse untergebracht sein, während der Träger aufgrund seiner elastischen Eigenschaften die notwendige Beweglichkeit bereitstellt.

Bereits bei einer geringen Verformung des Trägers kann die Signalempfangseinrichtung relativ zu dem Gehäuse des Arbeitsgeräts bewegt werden und dadurch der von außen einwirkenden Kraft ausweichen. Dazu ist es nicht erforderlich, dass der Träger an der Befestigungsstelle räumlich von dem Gehäuse getrennt wird. Vielmehr genügt bereits eine gewisse Relativbewegung zwischen dem Träger und dem Gehäuse an der Befestigungsstelle, um dort den Träger zu lösen und wenigstens mit einem geringen Maß in das Innere des Gehäuses zu bewegen.

Somit bedeutet die Angabe "lösbar", dass der Träger aus seiner Ausgangsstellung bzw. Ruhestellung in einem Belastungszustand in eine ausgelenkte Stellung bewegbar ist.

Ebenso ist es auch möglich, dass der Träger im Bereich der Befestigungsstelle vollständig von dem Gehäuse getrennt wird, also nicht mehr mit dem Gehäuse verbunden ist.

Der elastisch verformbare Träger kann insbesondere federelastisch verformbar sein, so dass die Verformung des Trägers nach Einwirken der Kraft wieder rückgebildet werden kann. Eine zusätzliche plastische Verformung kann bei einer Variante möglich sein. Bei einer anderen Variante hingegen ist eine plastische Verformung des Trägers nicht vorgesehen.

Die auf die Signalempfangseinrichtung wirkende Kraft sollte ein gewisses Maß überschreiten, um die Bewegung des Trägers zu bewirken. Insbesondere ist es vorgesehen, dass erst bei Überschreiten einer vorgegebenen Grenze bzw. eines vorgegebenen Grenzwerts für die Kraft ein Bewegen der Signalempfangseinrichtung relativ zu dem Gehäuse des Arbeitsgeräts gewünscht ist. Im normalen Betrieb weist auch die Signalempfangseinrichtung eine gewisse Robustheit auf, so dass sie nicht schon bei geringen Krafteinwirkungen bewegt werden muss.

Der Träger kann an wenigstens zwei Befestigungsstellen mit dem Gehäuse verbunden sein, wobei an einer ersten der Befestigungsstellen eine Schwenkachse ausgebildet ist, um die der Träger mit der Signalempfangseinrichtung verschwenkbar ist, wenn die Kraft auf die Signalempfangseinrichtung ausgeübt wird, und wobei an der zweiten der Befestigungsstellen der Träger derart an dem Gehäuse lösbar befestigt ist, dass bei Einwirken der Kraft auf die Signalempfangseinrichtung die Verbindung zwischen dem Träger und dem Gehäuse an dieser Befestigungsstelle aufgrund einer elastischen Verformung des Trägers lösbar ist.

Der Träger kann somit über die zwei Befestigungsstellen an dem Gehäuse befestigt sein, wobei eine der Befestigungsstellen als Schwenkachse dient bzw. eine Schwenkachse bildet und der Träger an der anderen Befestigungsstelle von dem Gehäuse gelöst werden kann. Der Träger kann dann um die Schwenkachse verschwenkt werden, wodurch die Signalempfangseinrichtung der einwirkenden Kraft nachgibt.

Je nach Ausgestaltung des Trägers kann die Signalempfangseinrichtung an dem Arbeitsgerät in mehrere Raumrichtungen elastisch beweglich befestigt sein.

Die Lösbarkeit des Trägers von dem Gehäuse an der zweiten Befestigungsstelle kann insbesondere durch die elastische Verformbarkeit des Trägers erreicht werden. Indem sich der Träger bei Einwirken der Kraft elastisch verformt, kann er sich an der zweiten Befestigungsstelle relativ zu dem Gehäuse bewegen und so die Verbindung zu dem Gehäuse zumindest derart verändern, dass auch die Bewegung der Signalempfangseinrichtung erreicht wird. Eine vollständige Lösbarkeit im Sinne einer räumlichen Trennung des Trägers von dem Gehäuse ist dabei nicht unbedingt erforderlich, aber auch möglich, insbesondere bei einer stärkeren Einwirkung der Kraft.

Der Träger kann aus einem Elastomermaterial bestehen, um die gewünschte elastische Verformbarkeit des Trägers zu erreichen. Ebenso ist es möglich als Material für den Träger ein Thermoplastmaterial vorzusehen, soweit es die erforderlichen elastischen Eigenschaften mitbringt. Zudem kann der Träger auch Kunststoff- oder Metallfederelemente aufweisen, die die elastische Verformbarkeit des Trägers bereitstellen.

Als Elastomermaterial eignet sich z.B. Polyurethan oder auch ein synthetischer Kautschuk wie EPDM (Ethylen-Propylen-Dien). Dabei sind verschiedene Shore-Härten möglich, wobei insbesondere höhere Härten wie z.B. mehr als 70 Shore sinnvoll sein können. Das Material sollte darüber hinaus witterungsbeständig und UV-beständig sein, um einen Außeneinsatz des Arbeitsgeräts zu ermöglichen. Vorteilhaft ist es dabei auch, wenn das Material auch bei Temperaturen unterhalb von 0 Grad noch ausreichend elastisch ist.

Auch ist es möglich, dass der Träger aus einer Kombination von verhältnismäßig steifen oder starren Komponenten und elastischen Komponenten gebildet wird. Es kommt dabei darauf an, dass der Träger aufgrund seiner insgesamt elastischen Eigenschaften die Relativbewegung der starren Signalempfangseinrichtung relativ zu dem Gehäuse ermöglicht.

An der ersten Befestigungsstelle kann an dem Träger wenigstens ein Befestigungselement ausgebildet sein, das in eine Lageraufnahme an dem Gehäuse einsteckbar ist. Das Befestigungselement kann einstückig mit dem Träger verbunden sein oder als Zusatzteil an dem Träger vorgesehen sein. Durch das Einstecken in die Lageraufnahme wird eine relativ einfache Verbindung des Trägers mit dem Gehäuse erreicht.

Bei einer Variante können an der ersten Befestigungsstelle an dem Träger zwei voneinander beabstandete Befestigungselemente ausgebildet sein, die in Lageraufnahmen an dem Gehäuse einsteckbar sind, wobei sich die Schwenkachse im Wesentlichen zwischen den beiden Befestigungselementen bzw. parallel zu einer Verbindungslinie zwischen den beiden Befestigungselementen erstreckt. Bei dieser Variante ist der Träger somit über die beiden Befestigungselemente mit dem Gehäuse verbunden und kann bei Einwirken der Kraft um die im Wesentlichen durch die Befestigungselemente gebildete Schwenkachse verschwenkt werden.

An der zweiten Befestigungsstelle kann an dem Träger wenigstens ein Halteelement ausgebildet sein, das in eine Halteaufnahme an dem Gehäuse einsteckbar ist, wobei bei Einwirken der Kraft auf die Signalempfangseinrichtung der Träger derart elastisch verformbar ist, dass das Halteelement aus der Halteaufnahme heraus bewegbar ist und der Träger um die Schwenkachse verschwenkbar ist. Dabei ist es nicht erforderlich, dass der Träger mit seinem Halteelement vollständig aus der Halteaufnahme herausbewegt wird. Vielmehr genügt unter Umständen - je nach Stärke der einwirkenden Kraft - bereits ein geringfügiges Herausbewegen des Halteelements aus der Halteaufnahme, um die Signalempfangseinrichtung relativ zu dem Gehäuse zu bewegen und dadurch von der einwirkenden Kraft zu entlasten.

Ebenso ist es aber auch möglich, dass das Halteelement vollständig aus der Halteaufnahme herausbewegt wird, so dass der Träger frei um die Schwenkachse verschwenkt werden kann.

Die Lageraufnahme und/oder die Halteaufnahme kann auf einer Innenseite des Gehäuses als Schlitz ausgebildet sein, in die das zugeordnete Befestigungselement und/oder das zugeordnete Halteelement einsteckbar ist. Durch das Einstecken des Befestigungselements oder des Halteelements in den jeweiligen Schlitz kann in sehr einfacher Weise eine Verbindung zwischen dem Träger und dem Gehäuse hergestellt werden. Dabei kann auch die elastische Eigenschaft des Trägers ausgenutzt werden, wenn dessen entsprechender Bestandteil in den Schlitz eingeklemmt wird. Die Schlitze können jeweils geeignete Dimensionen und Formen aufweisen, um ein Einstecken bzw. Einklemmen des zugeordneten Befestigungselements oder Halteelements zu ermöglichen.

Die Halteaufnahme kann als Schlitz auf der Innenseite des Gehäuses ausgebildet sein und das Halteelement kann in einem Ausgangszustand in den Schlitz eingesetzt sein, während das Halteelement in einem Belastungszustand, in dem eine entsprechend starke Kraft auf die Signalempfangseinrichtung einwirkt, bei einer elastischen Verformung des Trägers aus dem Schlitz herausziehbar ist. Die Halteaufnahme kann demnach sehr einfach schlitzförmig ausgebildet sein. Das Halteelement, das insbesondere auch die elastisch verformbare Eigenschaft des Trägers aufweist, kann beim Einsetzen in den Schlitz aufgrund einer elastischen Verformung eingeklemmt werden (Ausgangszustand). Bei Einwirken der Kraft in dem Belastungszustand verformt sich der Träger, so dass das Halteelement aus dem Schlitz herausgezogen wird.

Der Träger kann plattenförmig ausgebildet sein und auf seiner Plattenoberseite die Signalempfangseinrichtung tragen. Eine plattenförmige Gestaltung des Trägers ist sehr einfach herstellbar, indem zum Beispiel der Träger einfach aus einer Elastomerplatte herausgeschnitten wird. Die Signalempfangseinrichtung wird dann auf der Platte angebracht.

Das Befestigungselement und/oder das Halteelement können jeweils als Fortsatz an dem plattenförmigen Träger ausgebildet sein. Auch diese Ausbildung lässt sich sehr leicht herstellen, indem das Befestigungselement (bzw. die mehrere Befestigungselemente) und/oder das Halteelement (bzw. die mehreren Halteelemente) beim Ausschneiden der Platte gleich mit ausgeschnitten werden.

Bei einer Variante können das Befestigungselement und/oder das Haltelement auch als separates Teil an dem Träger befestigt sein. Insbesondere können dabei das Befestigungselement und/oder das Halteelement ihrerseits ebenfalls elastische, zum Beispiel federelastische, Eigenschaften aufweisen, um die Relativbewegung des Trägers relativ zum Gehäuse zu ermöglichen. Der Träger kann in diesem Fall auch etwas steifer ausgeführt werden, da das Befestigungselement und/oder das Halteelement zur elastischen Beweglichkeit beitragen.

Bei dieser Variante können das Befestigungselement und/oder das Halteelement zum Beispiel in Form von Elastomer-Klipsen ausgebildet sein, die elastisch in die Lageraufnahme bzw. die Halteaufnahme des Gehäuses eingesteckt werden können und den Träger elastisch tragen.

Bei einer Variante sind das Befestigungselement oder die mehreren (zum Beispiel zwei) Befestigungselemente als Drehlager ausgebildet. In diesem Fall können die Befestigungselemente sehr einfach die Schwenkachse bilden, um die der Träger beim Belasten mit der Kraft verschwenkt wird.

Die Signalempfangseinrichtung kann einen Infrarotsensor aufweisen, der von einem Empfängergehäuse aufgenommen ist, wobei das Empfängergehäuse von dem Träger getragen wird.

Als Arbeitsgerät eignet sich insbesondere eine Baumaschine zur Bodenverdichtung, wie zum Beispiel eine Vibrationswalze oder eine Vibrationsplatte.

Diese und weitere Merkmale der Erfindung werden nachfolgend anhand von Beispielen unter Zuhilfenahme der begleitenden Figuren näher erläutert. Es zeigen:
**Figur 1** in Perspektivansicht eine Signalempfangseinrichtung mit Träger;
**Figur 2** eine perspektivische Innenansicht eines Gehäuses eines Arbeitsgeräts mit eingesetztem Träger;
**Figur 3** verschiedenen Stadien der Verformung eines Trägers bei Einwirken einer Kraft;
**Figur 4** eine Variante der von einem Träger getragenen Signalempfangseinrichtung;
**Figur 5** verschiedene Stadien der Verformung des Trägers von Figur 4;
**Figur 6** als Befestigungs- oder als Haltelemente dienende Elastomer-Klipse;
**Figur 7** einen Gehäuseteilausschnitt mit einem durch Elastomer-Klipse befestigten Träger; und
**Figur 8** eine Variante des Trägers.

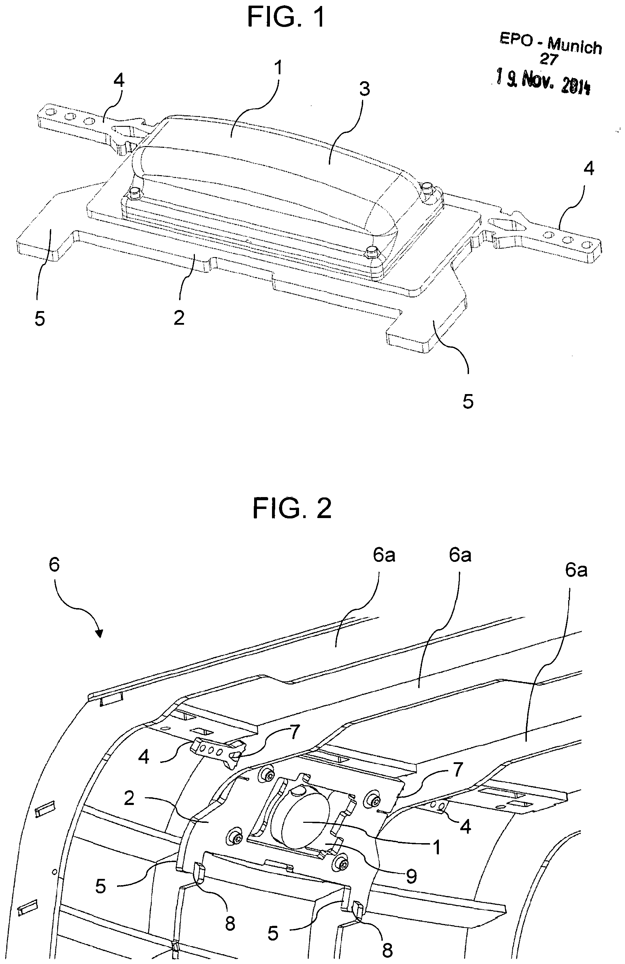

Figur 1 zeigt eine Signalempfangseinrichtung 1, die auf einem Träger 2 befestigt ist.

Die Signalempfangseinrichtung kann in bekannter Weise einen Infrarotsensor aufweisen, der von einem Empfängergehäuse 3 aufgenommen und geschützt ist.

Der Träger 2 weist eine plattenförmige Gestaltung aus einem Elastomermaterial auf und ist dadurch - wenigstens in gewissen Grenzen - elastisch verformbar. Darüber hinaus weist er aber auch eine ausreichende Steifigkeit auf, um die Signalempfangseinrichtung 1 zuverlässig zu tragen.

An gegenüberliegenden Querseiten des Trägers 2 sind Fortsätze ausgebildet, die einerseits als Befestigungselemente 4 und andererseits als Halteelemente 5 dienen, wie später noch erläutert wird.

Als Material für den Träger 2 eignen sich zum Beispiel formfeste, aber elastisch verformbare Kunststoffe, die sich bei Zug- und Druckbelastung elastisch verformen, aber danach wieder in ihre ursprüngliche, unverformte Gestalt zurückfinden. Dafür eignen sich zum Beispiel Polyurethan, Vulkanisate von Naturkautschuk und Silikonkautschuk etc. Weiterhin möglich sind auch thermoplastische Elastomere, die sich bei Raumtemperatur wie Elastomere verhalten, sich jedoch unter Wärmezufuhr plastisch verformen lassen und somit ein thermoplastisches Verhalten zeigen.

Für den Träger 2 hat sich in der Praxis eine Gestaltung mit einer Polyurethan-Platte mit einer Stärke von 6 mm und einer Shore-Härte von 80 bewährt. Selbstverständlich sind auch andere Ausgestaltungen möglich, sofern der Träger 2 auch starke Verformungen erträgt, ohne dass das Material bricht oder einreißt.

Die Signalempfangseinrichtung 1 kann mit dem Empfängergehäuse 3 und dem Träger 2 zu einer kompakten Einheit verbaut sein. Die Elastizität des Trägers wird dann allein durch die Fortsätze, nämlich die Befestigungselemente 4 und das Haltelement 5 erreicht, weil ein erheblicher Teil des plattenförmigen Trägers 2 durch die starre Signalempfangseinrichtung 1 versteift ist.

Die gegenüber liegenden Befestigungselemente 4 bilden eine Schwenkachse, um die der Träger 2 bei Einwirken einer Kraft verschwenkt werden kann.

Figur 2 zeigt die Innenseite eines Gehäuses 6 eines Arbeitsgerätes (hier: eine Vibrationsplatte).

Das Gehäuse 6 weist an seiner Innenseite Streben 6a auf, an denen schlitzförmige Öffnungen 7, 8 ausgebildet sind. In die Öffnungen 7, 8 bzw. Ausnehmungen sind die Fortsätze des Trägers 2 eingesteckt. Insbesondere sind die als Befestigungselement 4 dienenden Fortsätze in die oberen Öffnungen 7 eingesteckt, während die als Halteelemente 5 dienenden Fortsätze in die unteren schlitzförmigen Öffnungen 8 eingesteckt sind.

Aufgrund der Elastizität des Trägers 2, der in Figur 2 von seiner Rückseite her sichtbar ist, und damit der Elastizität der Befestigungselemente 4 und der Halteelemente 5 ist es möglich, die Befestigungselemente 4 quasi in die Öffnungen 7 "einzufädeln" und danach den Träger 2 mit der darauf montierten Signalempfangseinrichtung 1 so gegen das Gehäuse 6 zu drücken, dass die Halteelemente 5 in die Öffnungen 8 einrasten.

Die Befestigungselemente 4 können Ausnehmungen aufweisen, um das Einfädeln in die Öffnungen 7 zu erleichtern. Zudem können die Befestigungselemente 4 elastische Rastelemente aufweisen, womit die Befestigungselemente 4 in den Öffnungen 7 gehalten werden können.

So ist es möglich, dass die Befestigungselemente 4 nicht massiv durch das Elastomermaterial ausgebildet sind, sondern aufgrund der Ausnehmungen eine gegenüber dem restlichen Träger 2 größere Verformbarkeit aufweisen, so dass die Befestigungselemente 4 von einen Monteur mit bequemem Kraftaufwand in die Öffnungen 7 eingefädelt werden können. Die Rastelemente an den Befestigungselementen 4 können in Form von Verbreiterungen ausgebildet sein, die nach dem Einfädeln der Befestigungselemente 4 die Öffnungen 7 hintergreifen, wie die Figuren 1 und 2 zeigen.

Wie in Figur 2 erkennbar, ist in dem Träger 2 ein Ausschnitt 9 ausgebildet, durch den sich ein Teil der Signalempfangseinrichtung 1 erstreckt. Die Signalempfangseinrichtung 1 wiederum ist mit ihrer in Figur 1 sichtbaren Außenseite nach außen gerichtet und durchdringt das Gehäuse 6. So ist es möglich, dass die zur Fernsteuerung dienenden Infrarotsignale von außen die Signalempfangseinrichtung 1 erreichen.

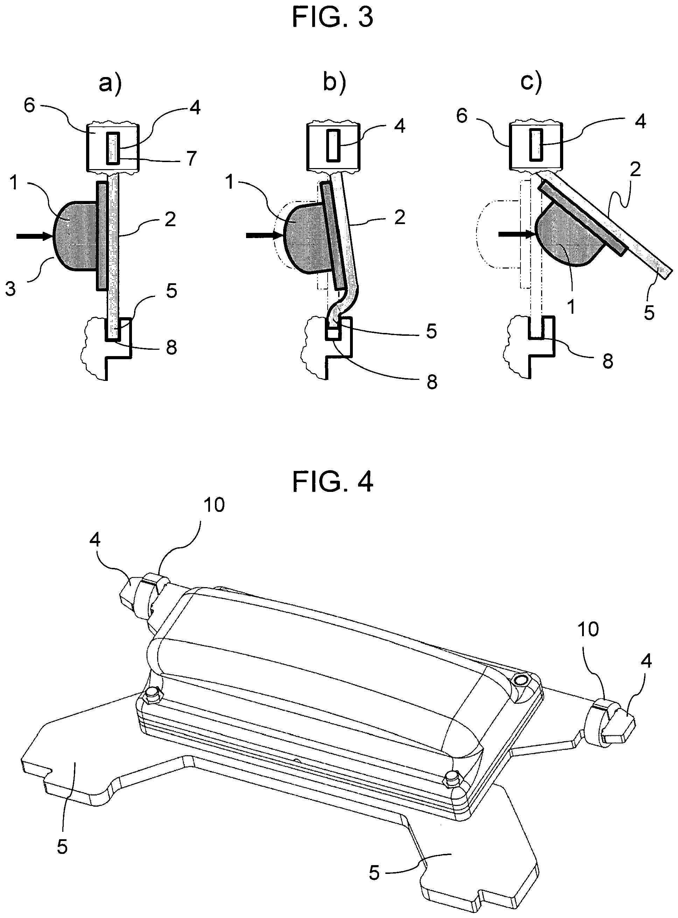

Figur 3 zeigt verschiedene Stadien der Verformung des Trägers 2, wenn von außen eine Kraft (in Pfeilrichtung) auf das Empfängergehäuse 3 der Signalempfangseinrichtung 1 einwirkt.

In Figur 3a wird der Ausgangszustand beschrieben, bei dem die Signalempfangseinrichtung 1 noch unbelastet oder nur geringfügig belastet ist.

Figur 3b zeigt einen Zustand, in dem die Signalempfangseinrichtung 1 durch das Einwirken der Kraft in Pfeilrichtung bereits etwas in das Innere des Gehäuses 6 eingedrückt ist. Noch befindet sich ein Teil des Halteelements 5 in der schlitzförmigen Öffnung 8 und wird daher darin gehalten. Der Träger 2 ist aber bereits etwas um die eine Schwenkachse bildenden Befestigungselemente 4 verschwenkt, so dass die Verbindung zwischen dem Träger 2 und dem Gehäuse 6 an der entsprechenden Befestigungsstelle, nämlich der Öffnung 8, gelöst ist.

In Figur 3c wird ein Belastungszustand gezeigt, bei dem die von außen einwirkende Kraft derart groß ist, dass die Halteelemente 5 vollständig aus der Öffnung herausgerutscht sind und der Träger 2 um die Befestigungselemente 4 stark verschwenkt wurde. Die Signalempfangseinrichtung 1 befindet sich nun vollständig im Inneren des Gehäuses 6 und ist dadurch gut gegen Krafteinwirkungen von außen geschützt. Die Kraft, zum Beispiel durch ein Hindernis, gegen das das Arbeitsgerät verfahren wurde, kann nicht weiter erhöht werden und wird vielmehr von dem wesentlich stabileren Gehäuse 6 des Arbeitsgeräts abgefangen. Die Signalempfangseinrichtung 1 im Inneren des Gehäuses 6 ist dann gut geschützt.

Wie oben erläutert und aus den Figuren 3b und 3c ersichtlich, bilden die in den Öffnungen 7 gehaltenen Befestigungselemente 4 eine Schwenkachse, um die der restliche Träger 2 bei Einwirken der Kraft verschwenkt werden kann.

Um den Ausgangszustand (Figur 3a) wiederherzustellen, können die als Einrast-Fortsätze dienenden Halteelemente 5 vom Bediener wieder in die als Führungen dienenden Öffnungen 8 gesteckt werden.

Figur 4 zeigt eine Variante zu Figur 1.

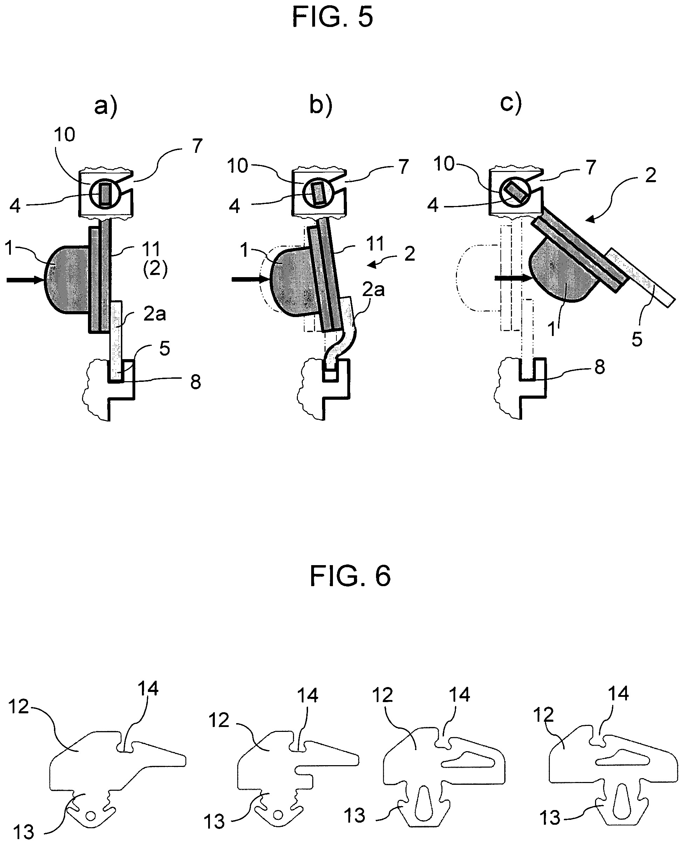

Dabei sind die Haltelemente 5 noch weiter ausladend gestaltet. An den Befestigungselementen 4 sind Elastomer-Ringe 10 aufgesetzt, die ihrerseits wieder in die schlitzförmigen Öffnungen 7 eingesetzt sind, wie Figur 5 zeigt. Die Elastomer-Ringe 10 dienen somit als Drehlager für den Träger 2 in dem Gehäuse 6. Die Schwenkachse des Trägers 2 entspricht dann der Mittelachse der Elastomer-Ringe 10.

In Figur 5 sind analog zu Figur 3 die verschiedenen Zustände beim Einwirken einer Kraft dargestellt. Demnach zeigt Figur 5a den unbelasteten Ausgangszustand, Figur 5b einen Zustand mit verhältnismäßig geringer Krafteinwirkung und Figur 5c einen Zustand mit größerer Krafteinwirkung, bei der die Halteelemente 5 vollständig aus den zugeordneten Öffnungen 8 herausbewegt sind. Das Verschwenken des Trägers 2 wird durch die als Drehlager dienenden Elastomer-Ringe 10 erleichtert, da der Träger 2 mit den Befestigungselementen 4 um die Elastomer-Ringe 10 verschwenkt werden kann.

Bei der Ausführungsform der Figuren 4 und 5 ist als Teil des elastischen Trägers 2 ein steifer Rahmen 11 vorgesehen, der die Signalempfangseinrichtung 1 trägt. Somit ist ein Teil des elastischen Trägers 2 durch den steifen Rahmen 11 gebildet. Die Signalempfangseinrichtung 1 ist auf dem steifen Rahmen 11 gehalten, der seinerseits wiederum mit einem ebenfalls zu dem Träger 2 gehörenden elastischen Element 2a verbunden ist (vgl. Seitenansichten in Figur 5).

Figur 6 zeigt verschiedene Beispiele für Elastomer-Klipse 12, die ebenfalls zum Erleichtern des Einbaus des Trägers an den Streben 6a des Gehäuses 6 verwendet werden können.

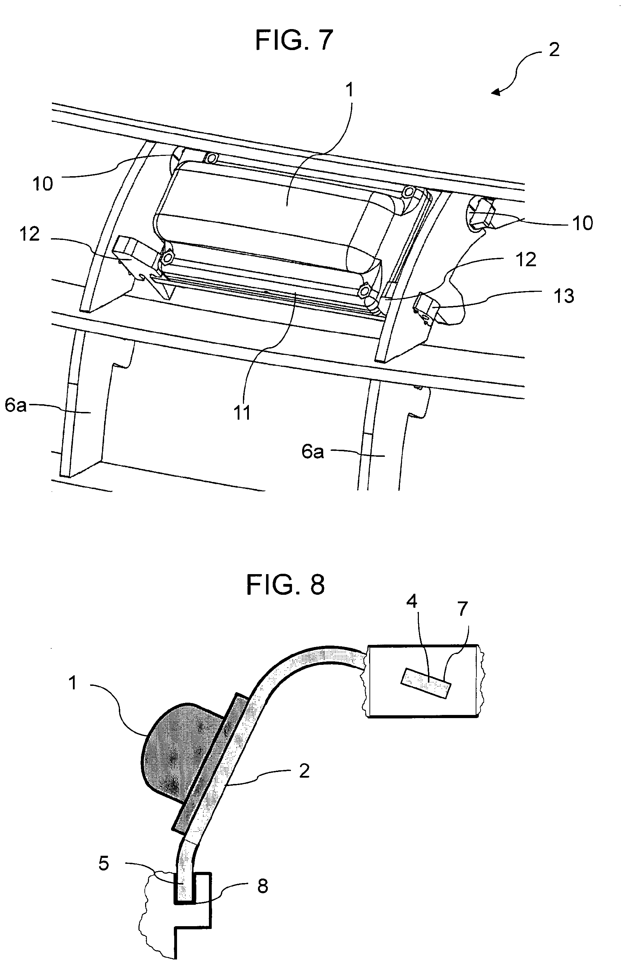

Die Elastomer-Klipse 12 weisen einen Fortsatz 13 auf, mit dem sie in jeweilige Öffnungen im Gehäuse 6 bzw. den dort verbauten Streben 6a eingesteckt werden können. Zudem weisen die Elastomer-Klipse 12 jeweils eine Ausnehmung 14 auf, in die der Träger 2 eingesetzt werden kann, wie zum Beispiel Figur 7 zeigt.

Die Elastomer-Klipse 12 können mit den Elastomer-Ringen 10 kombiniert werden, wie ebenfalls in Figur 7 erkennbar.

Wenn die elastischen Elastomer-Klipse 12 verwendet werden, kann der Rahmen 11 seinerseits steif ausgeführt werden und muss keine besonderen elastischen Eigenschaften aufweisen. Der Rahmen 11 bildet in funktionaler Einheit mit den elastischen Elementen, also den Elastomer-Ringen 10 und den Elastomer-Klipsen 12 den elastisch verformbaren Träger 2.

Der starre bzw. steife Rahmen 11 und die elastischen Elemente (Elastomer-Ringe 10, Elastomer-Klipse 12) können durch ihr Zusammenwirken gemeinsam die elastische Anbringung der Signalempfangseinrichtung 1 an dem Gehäuse 6 realisieren und stellen daher zusammen den Träger 2 dar.

Figur 8 zeigt eine weitere Variante, bei der der Träger 2 nicht in Form einer ebenen Platte, sondern plattenförmig gekrümmt ausgebildet ist. Auch hier kann insbesondere das Halteelement 5 bei einer Krafteinwirkung aus der Öffnung 8 herausbewegt werden und die Signalempfangseinrichtung 1 in das Innere des Gehäuses 6 verschwenken.

Darüber hinaus sind weitere Varianten und insbesondere auch Kombinationen der verschiedenen, vorstehend beschriebenen Merkmale denkbar, um eine elastische Verformbarkeit eines zwischen der Signalempfangseinrichtung 1 und dem Gehäuse 6 angeordneten Trägers 2 zu realisieren.

In den gezeigten Beispielen sind die Öffnungen 7, 8 schlitzförmig ausgeführt, was hinsichtlich Fertigung und Montage von Vorteil sein kann. Ebenso ist es aber auch möglich, die Öffnungen 7, 8 anders zu gestalten, zum Beispiel als Bohrungen.

Ebenso ist es denkbar, verschiedene der oben genannten Merkmale miteinander zu kombinieren, um insbesondere die elastische Verformbarkeit des Trägers 2 zu erreichen.

## Patentansprüche

1. Fernsteuerbares Arbeitsgerät, mit einer Signalempfangseinrichtung, die an dem Arbeitsgerät elastisch beweglich befestigt ist, wobei
- die Signalempfangseinrichtung (1) von einem elastisch verformbaren Träger (2) an einem Gehäuse (6) des Arbeitsgeräts gehalten ist,
- der Träger (2) an wenigstens einer Befestigungsstelle (7, 8) derart mit dem Gehäuse (6) verbunden ist, dass bei Einwirken einer Kraft auf die Signalempfangseinrichtung (1) die Verbindung zwischen dem Träger (2) und dem Gehäuse (6) an der Befestigungsstelle (7, 8) aufgrund einer elastischen Verformung des Trägers (2) lösbar ist, so dass der Träger (2) mit der Signalempfangseinrichtung (1) in das Innere des Gehäuses (6) bewegbar ist,
- der Träger (2) an wenigstens zwei Befestigungsstellen mit dem Gehäuse (6) verbunden ist,
- an einer ersten der Befestigungsstellen (4, 7) eine Schwenkachse ausgebildet ist, um die der Träger (2) mit der Signalempfangseinrichtung (1) verschwenkbar ist, wenn die Kraft auf die Signalempfangseinrichtung (1) ausgeübt wird, und wobei
- an der zweiten der Befestigungsstellen (5, 8) der Träger (2) derart an dem Gehäuse (6) lösbar befestigt ist, dass bei Einwirken der Kraft auf die Signalempfangseinrichtung (1) die Verbindung zwischen dem Träger (2) und dem Gehäuse (6) an dieser Befestigungsstelle (5, 8) aufgrund einer elastischen Verformung des Trägers (2) lösbar ist.

2. Arbeitsgerät nach Anspruch 1, wobei die Lösbarkeit des Trägers (2) von dem Gehäuse (6) an der zweiten Befestigungsstelle (5, 8) durch die elastische Verformbarkeit des Trägers (2) erreicht wird.

3. Arbeitsgerät nach einem der vorstehenden Ansprüche, wobei der Träger aus einem Elastomermaterial besteht.

4. Arbeitsgerät nach einem der vorstehenden Ansprüche, wobei
- an der ersten Befestigungsstelle an dem Träger (2) wenigstens ein Befestigungselement (4) ausgebildet ist, das in eine Lageraufnahme (7) an dem Gehäuse (6) einsteckbar ist.

5. Arbeitsgerät nach einem der vorstehenden Ansprüche 1-3, wobei
- an der ersten Befestigungsstelle an dem Träger (2) zwei voneinander beabstandete Befestigungselemente (4) ausgebildet sind, die in Lageraufnahmen (7) an dem Gehäuse (6) einsteckbar sind, und wobei
- sich die Schwenkachse zwischen den beiden Befestigungselementen (4) erstreckt.

6. Arbeitsgerät nach einem der vorstehenden Ansprüche, wobei
- an der zweiten Befestigungsstelle an dem Träger (2) wenigstens ein Halteelement (5) ausgebildet ist, das in eine Halteaufnahme (8) an dem Gehäuse (6) einsteckbar ist, und wobei
- bei Einwirken der Kraft auf die Signalempfangseinrichtung (1) der Träger (2) derart elastisch verformbar ist, dass das Halteelement (5) aus der Halteaufnahme (8) herausbewegbar ist und der Träger (2) um die Schwenkachse verschwenkbar ist.

7. Arbeitsgerät nach einem der Ansprüche 4 bis 6, wobei die Lageraufnahme (7) und/oder die Halteaufnahme (8) auf einer Innenseite des Gehäuses (6) als Schlitz ausgebildet ist, in die das zugeordnete Befestigungselement (4) und/oder das zugeordnete Halteelement (5) einsteckbar ist.

8. Arbeitsgerät nach einem der Ansprüche 6 oder 7, wobei die Halteaufnahme (8) als Schlitz auf der Innenseite des Gehäuses (6) ausgebildet ist und das Halteelement (5) in einem Ausgangszustand in den Schlitz eingesetzt ist, während das Halteelement (5) in einem Belastungszustand bei einer elastischen Verformung des Trägers (2) aus dem Schlitz herausziehbar ist.

9. Arbeitsgerät nach einem der vorstehenden Ansprüche, wobei der Träger (2) plattenförmig ausgebildet ist und auf seiner Plattenoberseite die Signalempfangseinrichtung (1) trägt.

10. Arbeitsgerät nach einem der Ansprüche 4 bis 9, wobei das Befestigungselement (4) und/oder das Halteelement (5) als Fortsatz an dem plattenförmigen Träger (2) ausgebildet ist.

11. Arbeitsgerät nach einem der Ansprüche 4 bis 10, wobei das Befestigungselement (4) und/oder das Halteelement (5) als separates Teil an dem Träger (2) befestigbar ist.

12. Arbeitsgerät nach einem der Ansprüche 4 bis 11, wobei das Befestigungselement (4) oder die Befestigungselemente (4) als Drehlager ausgebildet sind.

13. Arbeitsgerät nach einem der vorstehenden Ansprüche, wobei
- die Signalempfangseinrichtung (1) einen Infrarotsensor aufweist, der von einem Empfängergehäuse (3) aufgenommen ist; und wobei
- das Empfängergehäuse (3) von dem Träger (2) getragen wird.

## Claims

1. Remote-controllable working device, comprising a signal-receiving apparatus which is fastened in an elastically movable manner to the working device, wherein
- the signal-receiving apparatus (1) is held by an elastically deformable carrier (2) on a housing (6) of the working device,
- the carrier (2) is connected at at least one fastening point (7, 8) to the housing (6) such that, when a force acts upon the signal-receiving apparatus (1), the connection between the carrier (2) and the housing (6) at the fastening point (7, 8) can be released by reason of an elastic deformation of the carrier (2) so that the carrier (2) with the signal-receiving apparatus (1) can be moved into the interior of the housing (6),
- the carrier (2) is connected at at least two fastening points to the housing (6),
- a pivot axis is formed at a first one of the fastening points (4, 7), the carrier (2) with the signal-receiving apparatus (1) being able to be pivoted about said pivot axis if the force is exerted upon the signal-receiving apparatus (1), and wherein
- at the second one of the fastening points (5, 8) the carrier (2) is releasably fastened to the housing (6) such that, when the force acts upon the signal-receiving apparatus (1), the connection between the carrier (2) and the housing (6) at this fastening point (5, 8) can be released by reason of an elastic deformation of the carrier (2).

2. Working device as claimed in claim 1, wherein the carrier (2) can be released from the housing (6) at the second fastening point (5, 8) by the elastic deformability of the carrier (2).

3. Working device as claimed in any one of the preceding claims, wherein the carrier consists of an elastomer material.

4. Working device as claimed in any one of the preceding claims, wherein
- at least one fastening element (4) is formed at the first fastening point on the carrier (2) and can be inserted into a bearing receptacle (7) on the housing (6).

5. Working device as claimed in any one of the preceding claims 1-3, wherein
- two mutually spaced-apart fastening elements (4) are formed at the first fastening point on the carrier (2) and can be inserted into bearing receptacles (7) on the housing (6), and wherein
- the pivot axis extends between the two fastening elements (4).

6. Working device as claimed in any one of the preceding claims, wherein
- at least one holding element (5) is formed at the second fastening point on the carrier (2) and can be inserted into a holding receptacle (8) on the housing (6), and wherein
- when the force acts upon the signal-receiving apparatus (11), the carrier (2) can be elastically deformed such that the holding element (5) can be moved out of the holding receptacle (8) and the carrier (2) can be pivoted about the pivot axis.

7. Working device as claimed in any one of claims 4 to 6, wherein the bearing receptacle (7) and/or the holding receptacle (8) is formed on an inner side of the housing (6) as a slot, into which the allocated fastening element (4) and/or the allocated holding element (5) can be inserted.

8. Working device as claimed in any one of claims 6 or 7, wherein the holding receptacle (8) is formed as a slot on the inner side of the housing (6) and the holding element (5) in an initial state is inserted into the slot, while the holding element (5) in a loading state can be pulled out of the slot when the carrier (2) is being elastically deformed.

9. Working device as claimed in any one of the preceding claims, wherein the carrier (2) is plate-shaped and carries the signal-receiving apparatus (1) on its plate topside.

10. Working device as claimed in any one of claims 4 to 9, wherein the fastening element (4) and/or the holding element (5) is formed as an extension on the plate-shaped carrier (2).

11. Working device as claimed in any one of claims 4 to 10, wherein the fastening element (4) and/or the holding element (5) can be fastened as a separate part to the carrier (2).

12. Working device as claimed in any one of claims 4 to 11, wherein the fastening element (4) or the fastening elements (4) are formed as rotary bearings.

13. Working device as claimed in any one of the preceding claims, wherein
- the signal-receiving apparatus (1) has an infrared sensor which is accommodated by a receiver housing (3); and wherein
- the receiver housing (3) is carried by the carrier (2).

## Revendications

1. Engin de travail contrôlable à distance avec un dispositif de réception de signaux, qui est fixé de manière élastiquement mobile à l'engin de travail,
- le dispositif de réception de signaux (1) étant maintenu par un support (2) élastiquement déformable sur un boîtier (6) de l'engin de travail,
- le support (2) étant relié, au niveau d'au moins un point de fixation (7, 8), au boîtier (6) de façon à ce que, lors de l'application d'une force sur le dispositif de réception de signaux (1), la liaison entre le support (2) et le boîtier (6) au niveau du point de fixation (7, 8) puisse être détachée du fait d'une déformation élastique du support, de façon à ce que le support (2) puisse être déplacé avec le dispositif de réception de signaux (1) vers l'intérieur du boîtier (6),
- le support (2) étant relié, au niveau d'au moins deux points de fixation, au boîtier (6),
- au niveau d'un premier des points de fixation (4, 7), un axe de pivotement étant réalisé, autour duquel le support (2) peut pivoter avec le dispositif de réception de signaux (1) lorsque la force est exercée sur le dispositif de réception de signaux (1) et
- au niveau du deuxième des points de fixation (5, 8), le support (2) étant fixé de manière amovible au boîtier (6) de façon à ce que, lors de l'application de la force sur le dispositif de réception de signaux (1), la liaison entre le support (2) et le boîtier (6) au niveau de ce point de fixation (5, 8) puisse être détachée du fait d'une déformation élastique du support (2).

2. Engin de travail selon la revendication 1, la possibilité de détachement du support (2) du boîtier (6) au niveau du deuxième point de fixation (5, 8) étant obtenue grâce à la déformabilité élastique du support (2).

3. Engin de travail selon l'une des revendications précédentes, le support étant constitué d'un matériau élastomère.

4. Engin de travail selon l'une des revendications précédentes,
- au niveau du premier point de fixation, sur le support (2), étant réalisé au moins un élément de fixation (4) qui peut être inséré dans un logement de palier (7) sur le boîtier (6).

5. Engin de travail selon l'une des revendications précédentes 1 à 3,
- au niveau du premier point de fixation, sur le support (2), étant réalisés deux éléments de fixation (4) écartés entre eux, qui peuvent être insérés dans des logements de paliers (7) sur le boîtier (6) et
- l'axe de pivotement s'étendant entre les deux éléments de fixation (4).

6. Engin de travail selon l'une des revendications précédentes,
- au niveau du deuxième point de fixation sur le support (2), au moins un élément de maintien (5) étant réalisé, qui peut être inséré dans un logement de maintien (8) sur le boîtier (6) et
- lors de l'application de la force sur le dispositif de réception de signaux (1), le support (2) étant déformable élastiquement de façon à ce que l'élément de maintien (5) puisse être déplacé hors du logement de maintien (8) et à ce que le support (2) puisse pivoter autour de l'axe de pivotement.

7. Engin de travail selon l'une des revendications 4 à 6, le logement de palier (7) et/ou le logement de maintien (8) est réalisé sur un côté interne du boîtier (6) sous la forme d'une fente, dans laquelle l'élément de fixation (4) correspondant et/ou l'élément de maintien (5) correspondant peut être inséré.

8. Engin de travail selon l'une des revendications 6 ou 7, le logement de maintien (8) étant conçu comme une fente sur le côté interne du boîtier (6) et l'élément de maintien (5) est inséré, dans un état initial, dans la fente, tandis que l'élément de maintien (5) peut être retiré, dans un état de sollicitation, lors d'une déformation élastique du support (2), hors de la fente.

9. Engin de travail selon l'une des revendications précédentes, le support (2) présentant la forme d'une plaque et supportant le dispositif de réception de signaux (1) sur son côté supérieur.

10. Engin de travail selon l'une des revendications 4 à 9, l'élément de fixation (4) et/ou l'élément de maintien (5) est conçu comme un prolongement sur le support (2) en forme de plaque.

11. Engin de travail selon l'une des revendications 4 à 10, l'élément de fixation (4) et/ou l'élément de maintien (5) pouvant être fixé en tant que pièce séparée au support (2).

12. Engin de travail selon l'une des revendications 4 à 11, l'élément de fixation (4) et/ou les éléments de fixation (4) étant conçus comme des paliers rotatifs.

13. Engin de travail selon l'une des revendications précédentes,
- le dispositif de réception de signaux (1) comprenant un capteur infra-rouge qui est logé dans un boîtier de récepteur (3) ; et
- le boîtier de récepteur (3) est supporté par le support (2).
